# EUROPÄISCHE PATENTANMELDUNG

(11) **EP 2 774 937 A1**
(43) Veröffentlichungstag der Anmeldung: **10.09.2014**
(21) Anmeldenummer: 13157644.9
(22) Anmeldetag: 04.03.2013
(51) Int. Cl.: C08G 18/78, C08G 18/48

(54) **Glasklare Polyurethane**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft Verfahren zur Herstellung von kompakten transparenten Polyurethanen, bei dem man (a) Isocyanate mit (b) Verbindungen mit mindestens zwei gegenüber Isocyanaten reaktiven Gruppen (c) Katalysatoren und gegebenenfalls (d) Hilfsmittel und Zusatzstoffe zu einer Reaktionsmischung vermischt und zum kompakten transparenten Polyurethanen ausreagieren lässt, wobei die Isocyanate (a) zu mindestens 50 Gew.-% Biurete des Hexamethylendiisocyanats enthalten. Weiter betrifft die vorliegende Erfindung ein kompaktes, transparentes Polyurethan, das nach einem erfindungsgemäßen Verfahren hergestellt wurde und die Verwendung eines solchen kompakten, transparenten Polyurethans als Oberflächenbeschichtung, insbesondere im Innern von Verkehrsmitteln.

## Beschreibung

Die vorliegende Erfindung betrifft Verfahren zur Herstellung von kompakten, transparenten Polyurethanen, bei dem man (a) Isocyanate mit (b) Verbindungen mit mindestens zwei gegenüber Isocyanaten reaktiven Gruppen, (c) Katalysatoren und gegebenenfalls (d) Hilfsmittel und Zusatzstoffe zu einer Reaktionsmischung vermischt und zum kompakten transparenten Polyurethanen ausreagieren lässt, wobei die Isocyanate (a) zu mindestens 50 Gew.-% Biurete des Hexamethylendiisocyanats enthalten. Weiter betrifft die vorliegende Erfindung ein kompaktes, transparentes Polyurethan, das nach einem erfindungsgemäßen Verfahren hergestellt wurde und die Verwendung eines solchen kompakten, transparenten Polyurethans als Oberflächenbeschichtung, insbesondere im Innern von Verkehrsmitteln.

Kompakte, transparente Polyurethane sind bekannt und werden häufig eingesetzt. Ein bevorzugtes Einsatzgebiet ist die Beschichtung von Flächen in Innenräumen von Kraftfahrzeugen, insbesondere die Beschichtung von Holzeinlagen. Weitere bevorzugte Einsatzgebiete sind als Glasersatz, beispielsweise für Sonnendächer, Front-, Heck- und Seitenscheiben in Automobil- und Flugzeugbau und als Beschichtungen von Leuchtkörpern oder von Solaranlagen sowie Beschichtungen für technische Geräte.

Die Herstellung derartiger transparenter Polyurethane erfolgt üblicherweise durch Umsetzung von aliphatischen Polyisocyanaten mit Verbindungen, die mit Isocyanatgruppen reaktive Gruppen enthalten. Übliche aliphatische Isocyanate sind Hexamethylendiisocyanate (HDI) und Isophorondiisocyanate (IPDI). Da diese aliphatischen Isocyanate einen sehr hohen Dampfdruck aufweisen und das Einatmen Isocyanathaltiger Dämpfe stark gesundheitsgefährdend ist, werden diese Isocyanate üblicherweise in Form von Oligomeren, insbesondere Dimeren (Uretdionen) und Trimeren (Isocyanuraten) eingesetzt.

Kompakte transparente Polyurethane auf Basis aliphatischer Isocyanate, wie sie insbesondere im Innenraum von Kraftfahrzeugen eingesetzt werden, sind in vielen Dokumenten beschrieben.

In JP2005133013 wird ein kompaktes transparentes Polyurethan beschrieben, das unter Verwendung eines Gemisches aus Isocyanuraten von HDI und IPDI hergestellt wird. Als Verbindungen mit mindestens zwei mit Isocyanatgruppen reaktiven Wasserstoffatomen werden Polyole auf Basis von Caprolacton verwendet. Diese Polyole sind teuer in der Herstellung.

DE102004011348A1 beschreibt die Herstellung derartiger Polyurethane, wobei als Isocyanate monomere aliphatische Isocyanate oder deren Prepolymere eingesetzt werden. Als Katalysator wird eine Mischung aus verschiedenen Metallkatalysatoren verwendet. Diese Katalysatormischung ist in der Verarbeitung sehr empfindlich, weiter sind monomere Isocyaante toxisch.

DE1041295 beschreibt die Herstellung eines Prepolymers aus HDI oder IPDI und einem Polyol. Nach Herstellung des Prepolymers müssen monomeres HDI oder IPDI durch Destillation entfernt werden, da diese Monomere toxisch und flüchtig sind. Dieses Verfahren erfordert einen hohen Aufwand.

DE 19811289 beschreibt die Herstellung von harten, transparenten Polyurethanen unter Verwendung eines Gemisches aus Isocyanuraten aus HDI und IPDI. Als Polyole werden Mischungen beschrieben, die Polyetheralkohole und Polyesteralkohole enthalten. Derartige Polyole sind häufig unverträglich. Dies führt zu Mischungsproblemen bei der Verarbeitung. Weiterhin weisen Polyurethane auf Basis von Polyesteralkoholen meist eine unzureichende Hydrolysestabilität auf.

DE10209047214 beschreibt ein transparentes Polyurethan, das unter Einsatz einer Mischung aus HDI-Isocyanurat und IPDI-Isocyanurat erhalten wird. Nachteilig ist, dass IPDI-Isocyanurate fest sind und vor der Verarbeitung erst gelöst werden müssen.

EP 402212 beschreibt ein Verfahren zur Herstellung von kompakten transparenten Polyurethanbeschichtungen insbesondere für Sicherheitsverbundverglasungen, auf Basis aliphatischer Isocyanate mit selbstheilenden Eigenschaften. Dabei werden monomere, aliphatische Isocyanate, insbesondere HDI-Trimere verwendet, die unmittelbar vor der Polyurethanreaktion trimerisiert werden. Diese Verfahrensweise ist sehr aufwendig, außerdem ist monomeres aliphatisches Isocyanat auf Grund des hohen Dampfdrucks schwierig zu handhaben. Die Herstellung der Polyurethane erfolgt bei 120°. Außerdem führt der Einsatz von trimeren HDI-Isocyanurat zu einer verschlechterten Reißdehnung.

Weitere Nachteile bekannter, transparenter Polyurethane sind verbesserungswürdige Kratzfestigkeit und mechanische Eigenschaften, wie Reißfestigkeit. Weiter soll ein Polyurethansystem geliefert werden, das einfach und schnell zu homogenen, transparenten Polyurethanen verarbeitet werden kann.

Aufgabe der vorliegenden Erfindung war es daher, ein kratzfestes, transparentes Polurethan zu liefern, das selbstheilende Eigenschaften und sehr gute mechanische Eigenschaften aufweist. Weiter war es Aufgabe, ein solches einfaches Verfahren zur Herstellung eines solchen Polyurethans zu liefern, das auch bei niedrigen Temperaturen von kleiner 100 °C sicher durchgeführt werden kann.

Die erfindungsgemäße Aufgabe wird gelöst durch ein Verfahren zur Herstellung von kompakten, transparenten Polyurethanen, bei dem man (a) Isocyanate mit (b) Verbindungen mit mindestens zwei gegenüber Isocyanaten reaktiven Gruppen, (c) Katalysatoren und gegebenenfalls (d) Hilfsmittel und Zusatzstoffe zu einer Reaktionsmischung vermischt und zum kompakten transparenten Polyurethanen ausreagieren lasst, wobei die Isocyanate (a) zu mindestens 50 Gew.-% Biurete des Hexamethylendiisocyanats enthalten.

Unter kompakten Polyurethanen wird im Rahmen dieser Erfindung Polyurethan verstanden, dass ohne Zusatz von Treibmitteln hergestellt wurde. Gegebenenfalls können die verwendeten Polyole jedoch Spuren von Restwasser enthalten. Bevorzugt ist der Restwassergehalt unter 1 Gew.-%, besonders bevorzugt unter 0,3 Gew.-%, bezogen auf das Gesamtgewicht der eingesetzten Polyole. Als transparent werden Polyurethane bezeichnet, wenn eine Schrift der Buchstabengröße 3 (Letter Type Arial) in der Farbe Schwarz auf weißem Papier durch eine Platte aus erfindungsgemäßem Polyurethan von 5 mm Dicke hindurch gelesen werden kann, wenn die Platte direkt auf der Schrift liegt.

Als Isocyanate (a) kommen alle aliphatischen oder cycloaliphatischen Polyisocyanate, bevorzugt Diisocyanate in Betracht. Im Einzelnen seien beispielhaft genannt: aliphatische Diisocyanate, wie Hexamethylendiisocyanat-1,6, 2-Methyl-pentamethylendiisocyanat-1,5, cycloaliphatische Diisocyanate, wie Isophorondiisocyanat oder 1,4-Cyclohexandiisocyanat.

Die Isocyanate (a) werden vorzugsweise nicht in ihrer monomeren Form eingesetzt sondern enthalten Isocyanatprepolymere, Isocyanurate, Allophanate oder Biurete. Diese Isocyanate sind bekannt und können kommerziell erworben werden. Dabei ist es erfindungswesentlich, dass das aliphatische Isocyanat (a) zu mindestens 50 Gew.-%, bevorzugt zu mindestens 80 Gew.-%, besonders bevorzugt zu mindestens 90 Gew.-% und insbesondere im Wesentlichen ausschließlich Biurete des Hexamethylendiisocyanats (ai) enthält.

Dabei bedeutet "im Wesentlichen ausschließlich Biurete des Hexamethylendiisocyanats (ai)", neben Biureten des Hexamethylendiisocyanats keine weiteren Isocyaante zugegeben werden. Bei der Herstellung von Biuret des Hexamethylendiisocyanats (ai) erhaltene Nebenprodukte oder nicht umgesetzte und nicht durch übliche Verfahren wie Destillation abtrennbare Mengen an Nebenprodukten oder nicht umgesetzte Ausgansverbindungen werden dabei nicht berücksichtigt. Dabei beträgt der Gehalt an solchen Nebenprodukten und nicht umgesetzte Ausgansverbindungen vorzugsweise maximal 2,5 Gew.-%, besonders bevorzugt maximal 1 Gew.-% und insbesondere maximal 0,5 Gew.-%, bezogen auf das Gesamtgewicht der Biuret des Hexamethylendiisocyanats (ai). Vorzugsweise werden neben aliphatischen Isocyanaten und cycloaliphatischen Isocyanaten keine aromatischen Isocyanate eingesetzt, da diese meist nicht lichtecht sind und bei Lichteinwirkung im Laufe der Zeit zu Vergilben neigen.

Die Biurete des Hexamethylendiisocyanats (ai) können kommerziell, beispielsweise von der BASF unter dem Handelsnamen Basonat® HB erhalten werden. Diese werden üblicherweise erhalten durch Umsetzen von monomerem Hexamethylendiisocyanat mit Aminen, beispielsweise Diaminen, wie Ethylendiamin, oder mit Wasser, gegebenenfalls unter Einsatz eines Katalysators. Vorzugsweise werden als Biurete des Hexamethylendiisocyanats (ai) Verbindungen eingesetzt, die durch Reaktion von monomerem Hexamethylendiisocyanat und Wasser erhalten werden.

Vorzugsweise weisen die Isocyanate (a) einen mittleren NCO-Gehalt von 26,5 bis 16 Gew.-%, besonders bevorzugt 20 bis 24 Gew.-% und insbesondere 21 bis 23 Gew.-% Dabei beträgt die Viskosität der Isocyanate (a) bei 60 °C vorzugsweise weniger als 1000 mPas, besonders bevorzugt weniger als 750 mPas und insbesondere weniger als 500 mPas.

Als Verbindungen mit mindestens zwei gegenüber Isocyanaten reaktiven Gruppen (b) können beispielsweise Polyetherole, Polyesterole und niedermolekulare Alkohole oder Amine eingesetzt werden. Verbindungen mit mindestens zwei gegenüber Isocyanaten reaktiven Gruppen (b) weisen vorzugsweise eine mittlere, molare Funktionalität von 1,5 bis 6, vorzugsweise von 2 bis 5 und eine mittlere OH-Zahl von 100 bis 950 auf.

Vorzugsweise enthalten die Verbindungen mit mindestens zwei gegenüber Isocyanaten reaktiven Gruppen (b) Polyetherole und niedermolekulare Alkohole.

Die in der Komponente b) eingesetzten Polyetheralkohole werden durch an sich bekannte Anlagerung von Alkylenoxiden an Verbindungen, die mindestens zwei mit Alkylenoxiden reaktive Wasserstoffatome aufweisen.

Die Herstellung der Polyetheralkohole erfolgt nach bekannten Verfahren, zumeist durch katalytische Anlagerung von Alkylenoxiden, insbesondere Ethylenoxid und/oder Propylenoxid, besonders bevorzugt Propylenoxid, an H-funktionelle Startsubstanzen, wie mehrfunktionelle Alkohole, zum Einsatz. Bevorzugt eingesetzt werden als Startersubstanzen Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit, sowie aromatische Diole beispielsweise Bisphenol A, Bisphenol F oder Bisphenol S Als Katalysatoren bei der Anlagerung der Alkylenoxide kommen insbesondere basische Verbindungen zum Einsatz, wobei hier das Kaliumhydroxid die größte technische Bedeutung hat.

Als niedermolekulare Alkohole können beispielsweise zwei-, dreiwertige oder vierwertige Alkohole, wie Ethandiol, Propandiol-1,2 und -1,3, Diethylenglykol, Dipropylenglykol, Butandiol-1,4, Hexandiol-1,6, Glycerin und/oder Pentaerythrit, vorzugsweise Dipropylenglycol, eingesetzt werden.

Die Verbindungen mit mindestens zwei gegenüber Isocyanaten reaktiven Gruppen (b) enthält vorzugsweise zumindest einen Polyetheralkohol und/oder einen niedermolekularen Alkohol (bi) mit einer Funktionalität von 2 bis 5, vorzugsweise 2,5 bis 3,5 und einer OH-Zahl von mehr als 600 bis 950 mg KOH/g, bevorzugt 700 bis 900 mg KOH/g und insbesondere 800 bis 900 mg KOH/g und zumindest einen Polyetheralkohol (bii) mit einer Funktionalität von 2 bis 5, vorzugsweise 2,5 bis 3,5 und einer OH-Zahl von 50 bis 600 mg KOH/g, vorzugsweise 100 bis 500 mg KOH/g und besonders bevorzugt 150 bis 450 mg KOH/g.

Vorzugsweise enthalten Verbindungen mit mindestens zwei gegenüber Isocyanaten reaktiven Gruppen (b)neben den Verbindungen (bi) und (bii) weniger als 20 Gew.-%, besonders bevorzugt weniger als 10 Gew.-%, weiter bevorzugt weniger als 5 Gew.-%, bezogen auf das Gesamtgewicht der Komponente (b), an weiteren Verbindungen mit gegenüber Isocyanat reaktiven Gruppen. Insbesondere enthält die Komponente (b) neben den Verbindungen (bi) und (bii) keine weiteren Verbindungen mit gegenüber Isocyanat reaktiven Gruppen.

Vorzugsweise beträgt das Gewichtsverhältnis der Polyetheralkohole (bi) zu den Polyetheralkoholen (bii) 1 : 1 bis 1 : 6, besonders bevorzugt 1 : 1,5 bis 1 : 4,5 und insbesondere 1 : 1,8 bis 1 : 3,5. In einer besonders bevorzugten Ausführungsform der vorliegenden Erfindung werden als Verbindungen mit gegenüber Isocyanat reaktiven Gruppen Verbindungen eingesetzt, die, bezogen auf die Gesamtanzahl an OH-Gruppen in der Komponente (b), mindestens 70 %, besonders bevorzugt mindestens 85 % sekundäre OH-Gruppen aufweisen. Dabei weisen die in Komponente (b) eingesetzten Verbindungen vorzugsweise eine gemittelte Funktionalität von 2,3 bis 3,5, besonders bevorzugt 2,5 bis 2,99 auf.

Die Umsetzung der Verbindungen mit gegenüber Isocyanat reaktiven Gruppen (b) mit den Isocyanaten erfolgt üblicherweise in Anwesenheit von Katalysatoren und üblichen Hilfs- und/oder Zusatzstoffen.

Als Katalysatoren für die Herstellung der erfindungsgemäßen Polyurethanschaumstoffe können die üblichen und bekannten Polyurethanbildungskatalysatoren eingesetzt werden, beispielsweise organische Zinn-, Zink-, Titan-, Zirkonium, Aluminium-, Eisen und/oder Bismutverbindungen, insbesondere Zinn- und/oder Bismutverbindungen, wie Zinndiacetat, Zinndioctoat, Dialkylzinndilaurat, Dialkylzinncarboxylat, Dialkylzinnthiocarboxylat, Dialkylzinnmercaptid, Bismutcarboxylat und/oder stark basische Amine wie Triethylamin, Pentamethyldiethylentriamin, Tetramethyldiaminoethylether, 1,2-Dimethylimidazol, Dimethylcyclohexylamin, Dimethylbenzylamin oder vorzugsweise Triethylendiamin. Die Katalysatoren werden vorzugsweise in einer Menge von 0,01 bis 5 Gew.-%, vorzugsweise 0,05 bis 2 Gew.-%, bezogen auf das Gewicht der Verbindungen mit mindestens zwei aktiven Wasserstoffatomen, eingesetzt. Vorzugsweise werden nur Metallkatalysatoren eingesetzt, da bei Aminkatalysatoren ein Geruch des Polyurethans nie ganz ausgeschlossen werden kann, was für Kraftfahrzeuginnenräume sehr nachteilig ist. Außerdem können die Amine zu Verfärbungen des Polyurethans führen.

Als Hilfs- und/oder Zusatzstoffe (d) können alle bei der Herstellung der erfindungsgemäßen Beschichtungen übliche Additive, wie oberflächenaktive Substanzen, Füllstoffe, Gleit- und Entformungshilfen, Farbstoffe und Pigmente, Antioxidantien, z.B. gegen Hydrolyse, Licht, Hitze oder Verfärbung, Metalldeaktivatoren, anorganische und/oder organische Füllstoffe und Weichmacher eingesetzt werden.
Als Hydrolyseschutzmittel werden bevorzugt oligomere und/oder polymere aliphatische oder aromatische Carbodiimide verwendet.

Um die erfindungsgemäßen, transparenten Polyurethane gegen Alterung zu stabilisieren, werden bevorzugt Stabilisatoren eingesetzt. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 ([1]), S.98-S136.

Ist das erfindungsgemäße transparente Polyurethan während seiner Anwendung thermooxidativer Schädigung ausgesetzt, können Antioxidantien zugegeben werden. Bevorzugt werden phenolische Antioxidantien verwendet. Beispiele für phenolische Antioxidantien sind gegeben in Plastics Additive Handbook, 5th edition, H. Zweifel, ed, Hanser Publishers, München, 2001, S.98-107 und S 116-S. 121.

Wird erfindungsgemäßes transparentes Polyurethan UV-Licht ausgesetzt, enthält dieses vorzugsweise zusätzlich einen UV-Absorber. UV-Absorber sind Moleküle, die energiereiches UV-Licht absorbieren und die Energie dissipieren. Gängige UV-Absorber, welche in der Technik Verwendung finden, gehören z.B. zur Gruppe der Zimtsäureester, der Diphenylcyanacrylate, der Formamidine, der Benzylidenemalonate, der Diarylbutadiene, Triazine sowie der Benzotriazole. Beispiele für kommerzielle UV-Absorber finden sich in Plastics Additive Handbook, 5th edition, H. Zweifel, ed, Hanser Publishers, München, 2001, Seite 116-122.

Oft ist eine oben beschriebene UV-Stabilisierung basierend auf einem Antioxidant und einem UV-Absorber noch nicht ausreichend, um eine gute Stabilität des erfindungsgemäßen transparenten Polyurethans gegen den schädlichen Einfluss von UV-Strahlen zu gewährleisten. In diesem Falle kann zu der Komponente (e) bevorzugt zusätzlich zu dem Antioxidans und dem UV-Absorber, noch ein Hindered-Amine Light Stabiizer (HALS) eingesetzt werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere. HALS-Verbindungen sind allgemein bekannt und kommerziell erhältlich. Beispiele für kommerziell erhältliche HALS-Stabilisatoren finden sich in Plastics Additive Handbook, 5th edition, H. Zweifel, Hanser Publishers, München, 2001, S. 123-136.

Als Weichmacher können alle für die Verwendung in Polyurethanen bekannten Weichmacher eingesetzt werden. Diese umfassen beispielsweise Verbindungen, die mindestens eine phenolische Gruppe enthalten. Solche Verbindungen sind in EP 1529814 beschrieben.

Nähere Angaben über die oben genannten Hilfsmittel- und Zusatzstoffe sind der Fachliteratur zu entnehmen, z.B. aus Plastics Additive Handbook, 5th edition, H. Zweifel, ed, Hanser Publishers, München, 2001. Alle in dieser Schrift genannten Molekulargewichte weisen die Einheit [g/mol] auf.

Die Hilfs- und/oder Zusatzstoffe (d) werden zur Herstellung der Beschichtungen zumeist mit den Verbindungen mit mindestens zwei mit Isocyanatgruppen reaktiven Wasserstoffatomen zu einer sogenannten Polyolkomponente vereinigt.

Nach dem erfindungsgemäßen Verfahren können transparente Beschichtungen hergestellt werden. Diese weisen vorzugsweise eine Dicke von 0,1-3 mm auf. Diese Deckschichten können beispielsweise dem Schutz von Oberflächen dienen, beispielsweise im Bereich des Armaturenbretts von Kraftfahrzeugen.

Zur Herstellung der erfindungsgemäßen Polyurethane werden die Ausgangskomponenten üblicherweise bei einer Temperatur von 0-100°C, vorzugsweise von 20-80°C, gemischt und in das offene oder gegebenenfalls unter Druck in das geschlossene Formwerkzeug gegeben. Die Vermischung kann dabei mechanisch mittels eines Rührers oder mit einem Hochdruckmischkopf erfolgen. Vorzugsweise ist die Formtemperatur und die Temperatur der Einsatzkomponenten kleiner als 100 °C, besonders bevorzugt kleiner als 90 °C und insbesondere kleiner als 75 °C. Dies ermöglicht eine energieeffiziente Herstellung der Beschichtung sowie eine weitgehende Schonung des zu beschichtenden Materials.

Dabei werden die Komponenten zur Herstellung des erfindungsgemäßen transparenten Polyurethans in solchen Mengen zur Umsetzung gebracht, dass das Äquivalenzverhältnis von NCO-Gruppen der Isocyanatgruppen zur Summe der gegenüber Isocyanat reaktiven Wasserstoffatome vorzugsweise 1 : 0,85 bis 1 : 1,50, besonders bevorzugt 1 : 0,90 bis 1 : 1,30 mehr bevorzugt 1 : 0,95 bis 1 : 1,20 und insbesondere 1 : 1,00 bis 1,15 beträgt.

Nach dem erfindungsgemäßen Verfahren können auch transparente Beschichtungen hergestellt werden. Diese weisen vorzugsweise eine Dicke von 0,1-3 mm auf. Soll ein Gegenstand mit dem erfindungsgemäßen Polyurethan beschichtet werden, wird dieser vorzugsweise vor dem Einbringen der Polyurethansystemkomponenten in die Form eingelegt. Diese Deckschichten können beispielsweise dem Schutz von Oberflächen dienen, beispielsweise im Bereich des Armaturenbretts von Kraftfahrzeugen. Solche zu beschichtenden Gegenstände können beispielsweise aus Glas, Naturstoffen, wie Holz, Geweben oder Gewirken, wie Kohlefasermatten oder Glasfasermatten, oder Kunststoffen, wie Polycarbonaten oder ABS bestehen.

Die Umsetzung ist zumeist nach einer Zeit von 0.5-15 Minuten soweit abgeschlossen, dass das Polyurethan der Form entnommen werden kann.

Üblicherweise erfolgt auch die Herstellung der Beschichtungen in einer Form. Dabei wird der zu beschichtende Gegenstand so in die Form eingelegt, dass die flüssigen Ausgangskomponenten der Beschichtung in die Form auf die zu beschichtende Oberfläche aufgebracht werden können. Danach wird die Form geschlossen und die vermischten Ausgangskomponenten der Beschichtung wie oben beschrieben in die Form eingebracht.

Es ist prinzipiell auch möglich, die kompakte Beschichtung separat zu dem zu beschichtenden Gegenstand herzustellen und danach auf die Oberfläche aufzubringen, beispielsweise durch Verkleben.

Die Oberfläche kann danach durch mechanische Bearbeitung, beispielsweise Schleifen, weiter verbessert werden, beispielsweise durch polieren und oder einer Kombination von Schleifen und Polieren

Die erfindungsgemäßen Polyurethane weisen zumeist eine Dichte im Bereich 0,95-1,20 g/cm³ und eine Härte von vorzugsweise 80 shore A bis 80 shore D auf, bevorzugt 85 shore A bis 70 shore D, besonders bevorzugt shore A 90 bis 60 shore D.

Die erfindungsgemäßen Polyurethane können als Glasersatz, beispielsweise für Sonnendächer, Front-, Heck- und Seitenscheiben in Automobil- und Flugzeugbau und als Abdeckungen für Leuchtkörper oder Solaranlagen und technischen Geräten oder als Beschichtungen, beispielsweise in Innenräumen von Kraftfahrzeugen, eingesetzt werden, wobei vorzugsweise die zu beschichtende Oberfläche Holz ist. Insbesondere bei der Beschichtung von Leuchtmitteln oder als Glasersatz, beispielsweise bei der Herstellung von Scheiben, kann das erfindungsgemäße Polyurethan auch lichtabsorbierende Substanzen enthalten, die ein Abtönen oder Einfärben der Scheibe ermöglichen.

Die vorliegende Erfindung liefert ein kratzfestes, vorzugsweise selbstheilendes, transparentes Polurethan, das sehr gute mechanische Eigenschaften aufweist und das bei geringen Form-und Komponententemperaturen hergestellt werden kann, wodurch Energie eingespart und gegebenenfalls zu beschichtendes Material vor zu großer Wärmebelastung geschützt wird. Weiter ist das erfindungsgemäße Material einfach herzustellen, da das Mischungsverhältnis aus Isocyanatkomponente und Polyolkomponente im Bereich von 1 : 1 bis 1 : 2 liegt und damit die Gefahr von Materialfehlern durch unvollständige Vermischung minimiert wird. Weiter zeigt das vorliegende Material selbstheilende Effekte beim Kratzen, wodurch die Oberfläche auch bei längerer Benutzung ansprechend und Kratzerfrei bleibt.

Im Folgenden soll die vorliegende Erfindung anhand von Beispielen verdeutlicht werden.

Einsatzstoffe
- Polyol 1:: Polyetherpolyalkohol mit einer Hydroxylzahl von 860 mg KOH/g, hergestellt durch Umsetzung von Trimethylolpropan mit Propylenoxid.
- Polyol 2:: Polyetherpolyalkohol mit einer Hydroxylzahl von 160 mg KOH/g, hergestellt durch Umsetzung von Trimethylolpropan mit Propylenoxid.
- Alkohol:: Dipropylenglycol
- Katalysator A:: Zinn-Katalysator (Dimethylzinncarboxylat)
- Katalysator B:: Zinn-Katalysator (Dioctylzinnthioglykolat)
- Zusatzstoffe:: Stabilisatoren; Blockierungsmittel, interne Trennmittel.
- Isocyanat 1:: Isophorondiisocyanatbasiertes Prepolymer, erhältlich aus 100 Gew.-Teilen Isophorondiisocyanat, 15 Gew.-Teilen eines Polyetherpolyols auf Basis Trimethylolpropan/Propylenoxyd und einem Molekulargewicht von 192 g/mol und 15 Gew.-Teilen eines Polyesterpolyols auf Basis Adipinsäure / Diethylenglykol / Trimethylolpropan und einem Molekulargewicht von 2400 g/mol. Das fertige Prepolymer hatte einen NCO-Gehalt von 20,4 Gew.-%. Die Viskosität bei 60 °C beträgt 1740 mPas.
- Isocyanat 2:: Trimerisiertes aliphatisches Polyisocyanat auf Basis von Isophorondiisocyanat und Hexamethylen-1,6-diisocyanat, NCO-Gehalt 20,7%. Die Viskosität bei 60 °C beträgt 1190 mPas.
- Isocyanat 3:: Biuretisiertes Isocyanat auf Basis von Hexamethylen-1,6-diisocyanat mit Wasser, NCO-Gehalt 22,8 %, Gew.-%. Die Viskosität bei 60 °C beträgt 335 mPas.

Die Einsatzstoffe gemäß Tabelle 1 wurden bei einem Isocyanatindex von 100 vermischt, in eine Form gegeben und zu transparenten Polyurethanen verarbeitet. Die Mengen der Einsatzstoffe in der Polyolkomponente sind in Gewichtsteilen angegeben. Die Viskosität wurde nach DIN EN ISO 3219, die Shore-Härte nach DIN 53505, Bruchdehnung nach DIN EN ISO 527 und die Kratzfestigkeit durch Kratzen mit einem Prüfstab 318 S der Firma Erichsen mit einer Kraft von 10 N in Anlehnung an ISO 1518 mit einer halbkogelförmigen Spitze mit 0,75 mm Durchmesser bestimmt.

| Polyol | Vergleich 1 | Vergleich 2 | Vergleich 3 | Vergleich 4 | Beispiel |
|---|---|---|---|---|---|
| Polyol 1 | 64,00 | 97,30 | 97,30 | 97,30 | 15,00 |
| Polyol 2 | 32,00 | | | | 67,35 |
| Alkohol | | | | | 15,00 |
| | | | | | |
| Zusatzstoffe | 2,45 | 2,45 | 2,45 | 2,45 | 2,45 |
| | | | | | |
| Katalysator A | 1,05 | 0,25 | 0,50 | 0,25 | 0,50 |
| Katalysator B | 0,50 | | | | |
| Isocyanat | | | | | |
| Isocyanat 1 | 100,00 | | | | |
| Isocyanat 2 | | 100,00 | 100,00 | 100,00 | |
| Isocyanat 3 | | | | | 100,00 |
| | | | | | |
| Mischungsverhältnis 100 : | 222 | 314 | 314 | 314 | 127 |
| Entformzeit Platten [s] | 120 | 120 | | | 45 |
| Komponententemp. [°C] | 80 | 80 | 80 | 60 | 60 |
| Werkzeugoberflächentemp. [°C] | 80 | 90 | 90 | 60 | 60 |
| offene Zeit [s] | 6 | 10 | | | 8,5-9 |
| Shorehärte D | 85 | 86 | | | |
| Shorehärte A | | | | | 90 |
| Bruchdehnung [%] | 10 | 13 | | | 80 |
| Kratzfestigkeit | Starker Kratzer | Leichter Kratzer | | | Kratzer verschwindet |

In Vergleichsbeispiel 3 und 4 wurden keine transparenten Formkörper erhalten. So war das System aus Vergleichsversuch 3 bei 80 °C Form- und Komponententemperatur so reaktiv, dass sich die Form nicht vollständig füllen ließ. In Vergleichsversuch 4 war die Viskosität der Ispocyantkomponente bei 60 °C so hoch, dass die beiden Komponenten nicht vollständig mischen ließen.

Die Beispiele belegen, dass nach einem erfindungsgemäßen Verfahren bei geringer Form-und Komponententemperatur und geringer Entformzeit transparente Polyurethane mit hervorragenden mechanischen Eigenschaften erhalten werden.

## Patentansprüche

1. Verfahren zur Herstellung von kompakten, transparenten Polyurethanen, bei dem man
a) Isocyanate mit
b) Verbindungen mit mindestens zwei gegenüber Isocyanaten reaktiven Gruppen
c) Katalysatoren und gegebenenfalls
d) Hilfsmittel und Zusatzstoffe
zu einer Reaktionsmischung vermischt und zum kompakten transparenten Polyurethanen ausreagieren lässt, wobei die Isocyanate (a) zu mindestens 50 Gew.-% Biurete des Hexamethylendiisocyanats (ai) enthalten.

2. Verfahren nach Anspruch 1, **dadurch gekennzeichnet, dass** die Isocyanate (a) zu mindestens 90 Gew.-% Biurete des Hexamethylendiisocyanats (ai) enthalten.

3. Verfahren nach einem der Ansprüche 1 oder 2, **dadurch gekennzeichnet, dass** die Biurete des Hexamethylendiisocyanats (ai) erhältlich sind durch die Reaktion von Hexamethylendiisocyanat mit Wasser.

4. Verfahren nach einem der Ansprüche 1 bis 3, **dadurch gekennzeichnet, dass** die Isocyanate (a) einen mittleren NCO-Gehalt von 26,5 bis 16 Gew.-% aufweisen.

5. Verfahren nach einem der Ansprüche 1 bis 4, **dadurch gekennzeichnet, dass** die Verbindungen mit mindestens zwei gegenüber Isocyanaten reaktiven Gruppen (b) zumindest einen Polyetheralkohol (bi) mit einer Funktionalität von 2 bis 5 und einer OH-Zahl von mehr als 600 bis 950 und zumindest einen Polyetheralkohol (bii) mit einer Funktionalität von 2 bis 5 und einer OH-Zahl von 50 bis 600 enthält.

6. Verfahren nach Anspruch 5, **dadurch gekennzeichnet, dass** das Gewichtsverhältnis der Polyetheralkohole (bi) zu den Polyetheralkoholen (bii) 1 : 1 bis 1 : 6 beträgt.

7. Verfahren nach einem der Ansprüche 5 oder 6, **dadurch gekennzeichnet, dass** die Verbindungen mit mindestens zwei gegenüber Isocyanaten reaktiven Gruppen (b) neben den Polyetherpolyolen (bi) und den Polyetherpolyolen (bii) keine weiteren Polyole (b) enthalten.

8. Verfahren nach einem der Ansprüche 1 bis 7, **dadurch gekennzeichnet, dass** die Polyole (b) mindestens 70 % sekundäre OH-Gruppen aufweisen.

9. Verfahren nach einem der Ansprüche 1 bis 8, **dadurch gekennzeichnet, dass** die Polyole (b) eine mittlere Funktionalität von 2,3 bis 3,5 aufweisen.

10. Verfahren nach einem der Ansprüche 1 bis 9, **dadurch gekennzeichnet, dass** die Hilfsmittel und Zusatzstoffe ein Formtrennmittel enthalten.

11. Kompaktes, transparentes Polyurethan, erhältlich nach einem der Ansprüche 1 bis 10.

12. Verwendung eines kompakten, transparenten Polyurethans nach Anspruch 11 als Oberflächenbeschichtung.

13. Verwendung nach Anspruch 12, wobei die zu beschichtende Oberfläche ausgewählt ist aus der Gruppe, bestehend aus Glas, Holz, Kohlefasermatten, Glasfasermatten, oder Kunststoffen.

14. Verwendung nach Anspruch 13, wobei die zu beschichtende Oberfläche Holz ist.
